# EUROPÄISCHE PATENTSCHRIFT

(11) **EP 3 682 522 B1**
(45) Veröffentlichungstag und Bekanntmachung des Hinweises auf die Patenterteilung: **14.09.2022**
(21) Anmeldenummer: 18740808.3
(22) Anmeldetag: 12.07.2018
(51) Int. Cl.: H02J 3/28, H02J 3/32, H02J 7/34

(54) **VERFAHREN ZUM BETREIBEN EINES ENERGIESPEICHERS**
METHOD FOR OPERATING A STORED ENERGY SOURCE
PROCÉDÉ POUR FAIRE FONCTIONNER UN ACCUMULATEUR D'ÉNERGIE

(30) Priorität: 15.09.2017 DE 102017121461
(43) Veröffentlichungstag der Anmeldung: 22.07.2020
(73) Patentinhaber: Innogy SE, 45128 Essen (DE)
(72) Erfinder: SCHAARSCHMIDT, Gunnar, 45770 Marl (DE); LINDERS, Marc, 47877 Willich (DE); HERMES, Roland, 45141 Essen (DE)
(74) Vertreter: Cohausz & Florack
(86) Internationale Anmeldenummer: PCT/EP2018/068945
(87) Internationale Veröffentlichungsnummer: WO 2019/052713

(56) Entgegenhaltungen:
- EP-A1- 2 899 828
- US-A1- 2011 190 958
- US-A1- 2016 172 853

## Beschreibung

Der Gegenstand betrifft ein Verfahren zum Betreiben eines Energiespeichers, eine Steuervorrichtung für einen Energiespeicher sowie einen Versorgungsstrang eines Energieversorgungsnetzes.

Im Rahmen der Energiewende werden seit wenigen Jahren vermehrt Batteriespeicher zur Eigenbedarfsoptimierung aber auch zur Vermarktung von Regelenergie in das Versorgungssystem integriert. Insbesondere die Vermarktung von Regelenergie ist wirtschaftlich interessant, da allein für das Bereitstellen von Primärregelleistung bereits eine Vergütung anfällt.

Aufgrund der Gleichstromeigenschaften von solchen Energiespeichern, insbesondere basierend auf Batterien oder Kondensatoren, ist für die Integration in das Wechselstromsystem der öffentlichen Versorgung immer ein Wechselrichter zwischengeschaltet, der hohen Anforderungen an Regelungstechnik genügen muss.

Die große Menge dezentraler Erzeugung und die zunehmende Anzahl der Energiespeicher mit der Möglichkeit des Rückspeisens von elektrischer Energie in das Energieversorgungsnetz stellen den Netzwiederaufbau im Schwarzfall, also nach einem großflächigen Stromausfall vor größere Probleme. Insbesondere ist keine gesicherte Kommunikation zwischen solchen Energiespeichern im Schwarzfall möglich.

Eine wesentliche Herausforderung für einen Netzwiederaufbau nach einem Schwarzfall ist die gezielte Zuschaltung kleiner Lastanteile mit vorhersehbarem Verhalten. Beim Netzwiederaufbau wird zunächst ein initiales Kraftwerk im Eigenbedarf angefahren. Unter Zuschaltung von Lasten in der Größenordnung bis 5 MW wird das Netz hochgefahren. Dabei sind große Lastsprünge und erst recht Rückspeisungen höchst unerwünscht, da diese zu einer Schutzabschaltung des initialen Kraftwerks und zum erneuten Schwarzfall führen können. Die Rückspeisung durch dezentrale Erzeugung und Energiespeicher in dem Versorgungsnetz ist somit systemkritisch für den Wiederaufbau nach einem Schwarzfall.

Bisher sind dezentrale Erzeugung und entsprechend auch Energiespeicher so eingerichtet, dass diese zehn Minuten nach Spannungsrückkehr mit einer definierten Rampe zu ihrer Einspeiseleistung zurückkehren. Dies erfolgt jedoch für alle an diesem Netz angeschlossenen dezentralen Erzeuger und Energiespeicher synchron, was zu einer erheblichen Rückspeiseleistung nach einer bestimmten Zeit nach Spannungsrückkehr führt. Im schlimmsten Fall führt dies dann zum Scheitern des Netzwiederaufbaus, insbesondere zur Schutzabschaltung des initialen Kraftwerks.

Heutige Energiespeicher sind jedoch entweder ausschließlich für die Bereitstellung von Primärregelleistung oder für einen Regelbetrieb, beispielsweise bedarfsgerecht (eMobility) oder marktgesteuert (unterschiedliche Tarife) bzw. eigenbedarfsoptimiert (PV mit Speicher) eingerichtet. Somit beteiligen sich letztere Energiespeicher im Schwarzfall nicht an der Primärregelleistung und führen somit nicht zur Unterstützung des Netzwiederaufbaus oder verhalten sich sogar schädlich.

Dokumente US 2011/190958 A1 und EP 2 899 828 A1 offenbaren eine Regelvorrichtung für eine in einem Energieversorgungsnetz angeordnete elektrische Anlage zum Regeln des Wiederanfahrens der elektrischen Anlage anhand einer Einschaltverzögerungszeitspanne nach einem Stromausfall in dem Energieversorgungsnetz.

US 2016/172853 A1 offenbart das Betreiben eines Energiespeichers in einem Regelbetrieb und in einem Primärregelleistungsbetrieb.

Somit lag dem Gegenstand die Aufgabe zugrunde, den Netzwiederaufbau im Fall eines Schwarzfalls durch Energiespeicher zu unterstützen. Ferner lag dem Gegenstand die Aufgabe zugrunde, den Netzwiederaufbau ohne ein intaktes Kommunikationsnetz zu ermöglichen, da die Verfügbarkeit der öffentlichen Kommunikationssysteme im Schwarzfall gar nicht oder nur eingeschränkt gegeben ist.

Diese Aufgabe wird durch ein Verfahren nach Anspruch 1, eine Steuervorrichtung nach Anspruch 9 sowie einen Versorgungsstrang nach Anspruch 11 gelöst.

Ein Energiespeicher im Sinne des Gegenstands kann ein Batteriespeicher oder ein Speicher basierend auf Kondensatoren sein. Weitere Speichertechnologien sind ebenfalls möglich und umfassen, beispielsweise einen Wasserspeicher.

Energiespeicher sind an einem Energieversorgungsnetz in unterschiedlichen Betriebsmodi betreibbar. So ist es bekannt, einen Energiespeicher beispielsweise in einem Primärregelleistungsbetrieb zu betreiben. Beim Erbringen von Primärregelleistung wird der Leistungsfluss zwischen dem Energiespeicher und dem Versorgungsnetz allein über die Netzfrequenz gesteuert. Im Primärregelleistungsbetrieb erfolgt insbesondere keine Steuerung durch eine übergeordnete Instanz, sondern entsprechend einer lokal hinterlegten Kennlinie, die frequenzabhängig ist. Somit wird im Primärregelleistungsbetrieb vor Ort, d.h. lokal, die Netzfrequenz eigenständig gemessen und der Wechselrichter wird abhängig von der gemessenen Frequenz angesteuert. Die Leistungsabgabe des Energiespeichers wird dabei entsprechend der Kennlinie bevorzugt linear erhöht bzw. verringert.

Die Mehrzahl der inzwischen installierten Energiespeicher dient jedoch nicht der Erbringung von Primärregelleistung, sondern dient im Regelbetrieb anderen Zwecken. Im Regelbetrieb erfolgt die Steuerung des Wechselrichters unabhängig von der Netzfrequenz, sondern beispielsweise abhängig von einem externen Preissignal, einem externen Steuersignal, einem lokal erzeugten Steuersignal, beispielsweise abhängig von einer momentanen Erzeugung von elektrischer Leistung, beispielsweise in einem Solarkraftwerk oder einem Windkraftwerk oder dergleichen. In einem solchen Regelbetrieb erfolgt somit der Austausch von elektrischer Leistung zwischen dem Energiespeicher und dem Versorgungsnetz unabhängig von der Netzfrequenz.

Der gegenständliche Energiespeicher kann in sowohl dem Primärleistungsbetrieb als auch dem Regelbetrieb betrieben werden. Zunächst wird vorgeschlagen, dass der Energiespeicher in einem von einem Primärregelleistungsbetrieb verschiedenen Regelbetrieb betrieben wird. Insbesondere erfolgt der Regelbetrieb unabhängig von der Netzfrequenz und der Primärregelleistungsbetrieb abhängig, insbesondere ausschließlich abhängig von der Netzfrequenz bei vorhandener Netzspannung.

Während des Regelbetriebs wird überwacht, ob an dem Netzanschluss ein Stromausfall auftritt. Dies ist der sogenannte Schwarzfall. Ein Stromausfall an dem Netzanschluss kann dadurch erfasst werden, dass die Spannung an dem Netzanschluss einen unteren Grenzwert erreicht oder unterschreitet und insbesondere gleich 0 V wird. Dabei kann die Dauer einer solchen Unterschreitung/Erreichung des Grenzwertes überwacht werden und eine Mindestdauer, z.B. 1 Sek., 5 Sek. oder dergleichen einen Schwarzfall definieren.

Darüber hinaus kann es sinnvoll sein, dauerhaft die Netzfrequenz zu erfassen. Während einem unerwünschten Schwarzfall meist eine Änderung der Netzfrequenz vorausgeht, bleibt bei einer gewollten Abschaltung oder einer ungeplanten, lokalen Betriebsmittelstörung die Netzfrequenz bis unmittelbar vor diesem Ereignis stabil.

Nachdem der Stromausfall erfasst wurde, kann eine Spannungsrückkehr an dem Netzanschluss detektiert werden. Das Detektieren einer Spannungsrückkehr kann insbesondere das Ansteigen der Spannung über einen Grenzwert sein. Dabei ist es insbesondere möglich, dass die Spannung größer 0 V wird.

Darüber hinaus ist der Energiespeicher so eingerichtet, dass dessen Betriebsmodus wechselt und zwar von einem Regelbetrieb in den Primärregelleistungsbetrieb. Wurde der Energiespeicher vor dem Stromausfall noch im Regelbetrieb betrieben, so wechselt dieser in den Primärregelleistungsbetrieb. Der Wechsel in den Primärregelleistungsbetrieb kann insbesondere nach dem Detektieren des Stromausfalls an dem Netzanschluss oder nach dem Detektieren einer Spannungsrückkehr an dem Netzanschluss erfolgen. Präventiv ist jedoch auch möglich, dass der Wechsel in den Primärregelleistungsbetrieb bereits vor dem Erfassen des Stromausfalls geschieht, insbesondere wenn eine Frequenzschwelle über bzw. unterschritten wird. Beispielsweise kann der Wechsel in den Primärregelleistungsbetrieb bereits dann erfolgen, wenn die Netzfrequenz ein Regelband verlässt. Hierbei kann eine untere Netzfrequenz, beispielsweise 2% unterhalb der Regelnetzfrequenz liegen. Dies wäre in Deutschland idealerweise kurz oberhalb von 49 Hz bei einer Regelnetzfrequenz von 50 Hz anzusetzen, da dies die technisch festgelegte Grenze für die erste Stufe des frequenzbedingten Lastabwurfes ist. Eine obere Netzfrequenz kann z.B. 0,4% über der Regelnetzfrequenz liegen, beispielsweise bei 50,2 Hz. Der Wechsel in den Primärregelleistungsbetrieb erfolgt selbsttätig abhängig von einer detektierten Netzfrequenz.

Durch den Wechsel des Betriebsmodus wird durch den Energiespeicher Primärregelleistung an dem Netzanschluss nach dem Detektieren der Spannungsrückkehr bereitgestellt.

Das gegenständliche Verfahren eignet sich insbesondere zum Einsatz bei herkömmlichen Energiespeichern, die in der Regel im Regelbetrieb betrieben werden, also nicht zur Primärregelleistung an das Versorgungsnetz angeschlossen sind. Solche Energiespeicher sind vielfach verfügbar und werden insbesondere auch von Privathaushalten eingesetzt. Mit Hilfe des selbsttätigen Wechsels des Betriebsmodus in den Primärregelleistungsbetrieb können solche dezentralen Energiespeicher zum Wiederaufbau einer Versorgungsnetzes nach einem Schwarzfall beitragen.

Wie bereits erläutert, geht ein Stromausfall in der Regel einher mit einem zuvorigen Ansteigen oder Abfallen der Netzfrequenz. Der Energiespeicher bzw. die Steuerungsvorrichtung des Energiespeichers ist so eingerichtet, dass sie dauerhaft die Netzfrequenz überwacht. Gemäß einem vorteilhaften Ausführungsbeispiel wird vorgeschlagen, dass der Betriebsmodus des Energiespeichers vom Regelbetrieb in den Primärregelleistungsbetrieb bereits dann wechseln, wenn die Netzfrequenz ein Regelband verlässt. Ein Regelband liegt in Deutschland beispielsweise zwischen 49 Hz und 50,2 Hz. Primärregelleistung wird dann ab einer Frequenz von 49 Hz und darunter vollständig erbracht werden. Hierbei wird elektrische Leistung vom Energiespeicher in das Energieversorgungsnetz eingespeist. Ab einer Frequenz von 50,2 Hz und darüber wird Primärregelleistung in der Art erbracht, dass die gesamte Leistung des Energiespeichers zur Leistungsaufnahme von elektrischer Leistung aus dem Energieversorgungsnetz genutzt wird. In diesem Fall wird der Energiespeicher bereits zur Stabilisierung des Energieversorgungsnetzes genutzt, insbesondere wenn noch kein Stromausfall detektiert wurde.

Gemäß einem vorteilhaften Ausführungsbeispiel wird vorgeschlagen, dass der Energiespeicher unmittelbar nach dem Detektieren der Spannungsrückkehr im Primärregelleistungsbetrieb betrieben wird. D.h., dass unmittelbar nachdem die Spannungsrückkehr detektiert wurde, ohne eine Wartezeit, der Energiespeicher im Primärregelleistungsbetrieb betrieben wird. Dies kann beispielsweise aber auch dadurch erreicht werden, dass der Wechsel des Betriebsmodus präventiv schon vor dem Schwarzfall, insbesondere vor dem Erfassen des Stromausfalls vollzogen wurde. Dies kann beispielsweise durch Detektion des Verlassens eines Regelbands erfolgen, wie zuvor beschrieben wurde.

Gemäß einem Ausführungsbeispiel wird vorgeschlagen, dass der Primärregelleistungsbetrieb nach dem Detektieren der Spannungsrückkehr für einen Mindestzeitraum erhalten wird und dass nach Ablauf des Mindestzeitraums der Energiespeicher in den Regelbetrieb zurückkehrt. Der Mindestzeitraum kann beispielsweise 15 Minuten oder 60 Minuten betragen. Sollte der Energiespeicher währenddessen an seine Kapazitätsgrenzen stoßen, schränkt dies zwar die Leistung ein, der Modus bleibt dennoch über den Mindestzeitraum erhalten.

Wie bereits erläutert, kann im Primärregelleistungsbetrieb eine Regelkennlinie abhängig von einer Netzfrequenz sein. Insbesondere kann der Leistungsfluss abhängig von einer Netzfrequenz sein. Eine Regelkennlinie des Energiespeichers im Regelbetrieb kann anders sein. Insbesondere kann der Leistungsfluss abhängig beispielsweise von einem externen Steuersignal sein. Auch kann der Leistungsfluss abhängig von einer Spannung einer Erzeugungsanlage, beispielsweise einer Fotovoltaikanlage oder einer Windkraftanlage sein.

Gemäß einem weiteren Ausführungsbeispiel wird vorgeschlagen, dass zumindest zwei Energiespeicher eines gemeinsamen Versorgungsstrangs, insbesondere in einem synchronen Versorgungsgebiet, Primärregelleistung an ihrem jeweiligen Netzanschluss nach dem Detektieren der Spannungsrückkehr bereitstellen. Das gegenständliche Verfahren ist insbesondere sinnvoll, um den Netzwiederaufbau nach einem Schwarzfall zu unterstützen, wenn die Primärregelleistung ad hoc, im Netz verteilt, bereitgestellt werden kann. Hierzu können entlang eines Versorgungsstrangs zwei oder mehr Energiespeicher in den Primärregelleistungsbetrieb wechseln. Durch die ausschließlich frequenzabhängige Steuerung der Primärregelleistung schließen sich die zwei oder mehr Energiespeicher entlang des Versorgungsstrangs zu einem virtuellen Kraftwerk entlang dieses Versorgungsstrangs zusammen. Ein einzelner Energiespeicher kann beispielsweise eine Leistung von einigen Kilowatt haben. Schließen sich mehrere solche Energiespeicher ad hoc, frequenzgesteuert zusammen, so kann eine Primärregelleistung von mehreren Megawatt zusammenkommen, so dass ein Netz sicherer und schneller wiederhergestellt werden kann.

Es ist auch erkannt worden, dass die zur Verfügung gestellte Primärregelleistung nicht zu hoch sein darf. Insbesondere entlang eines Versorgungsstrangs muss die Primärregelleistung mit den an dem Versorgungsstrang angeordneten Lasten austariert sein. Wie viel gleichzeitig auftretende Primärregelleistung verkraftbar ist, hängt von der Auslegung des Netzes ab. Daher ist es nicht unbedingt sinnvoll, alle entlang eines Versorgungsstranges angeordneten Energiespeicher mit dem gegenständlichen Verfahren zu betreiben. Vielmehr ist es sinnvoll, gezielt einzelne Energiespeicher das gegenständliche Verfahren durchführen zu lassen, wohingegen andere Energiespeicher das gegenständliche Verfahren nicht anwenden. Zwar können alle Energiespeicher mit einer gleichen Steuerungssoftware und einer gleichen Steuerungsvorrichtung ausgestattet sein, jedoch können diese unterschiedlich parametriert sein, insbesondere kann bei einigen das gegenständliche Verfahren aktiviert sein, wohingegen bei anderen das gegenständliche Verfahren deaktiviert ist. Aus diesem Grunde wird vorgeschlagen, dass abhängig von Informationen zu einem gemeinsamen Versorgungsstrang und zumindest Informationen zu bereits installierter Primärregelleistung entlang dieses Versorgungsstrangs ein Energiespeicher zusätzlich im Primärregelleistungsbetrieb bei der Detektion der Spannungsrückkehr betrieben wird.

Ein weiterer Aspekt ist eine Steuervorrichtung nach Anspruch 9. Darin ist eine Detektionseinrichtung zur Überwachung einer Netzfrequenz an einem netzseitigen Anschluss des Energiespeichers an ein Energieversorgungsnetz vorgesehen. Mit Hilfe der Detektionseinrichtung kann die Netzfrequenz überwacht werden und bei Abweichung der Netzfrequenz, insbesondere aus einem Regelband, kann bereits ein Wechsel des Betriebsmoduses erfolgen.

Ferner ist eine Stelleinrichtung vorgesehen, mit der die Frequenz eines zwischen dem Energiespeicher und dem netzseitigen Anschluss des Energiespeichers an das Energieversorgungsnetz angeordneten Wechselrichters beeinflusst wird. Die Stelleinrichtung betreibt den Energiespeicher zunächst im Regelbetrieb.

Es ist jedoch erkannt worden, dass für den Wiederaufbau des Netzes ein Betriebsmoduswechsel vorteilhaft ist, derart, dass die Detektionseinrichtung nach einer detektierten Spannungsrückkehr an den Netzanschluss nach dem Erfassen des Stromausfalls die Stelleinrichtung derart ansteuert, dass der Energiespeicher im Primärregelleistungsbetrieb an dem Netzanschluss betrieben ist. D.h., dass der Energiespeicher von dem Regelbetrieb in den Primärregelleistungsbetrieb wechselt, wenn ein Schwarzfall aufgetreten ist.

Es ist insbesondere interessant, die Versorgungsqualität dadurch zu erhöhen, dass bei neu installierten Energiespeichern die Steuervorrichtung entsprechend aktiviert bzw. deaktiviert wird, um die Primärregelleistung an den jeweiligen Bedarf entlang eines Versorgungsstrangs einstellen zu können. Aus diesem Grunde wird vorgeschlagen, dass der Primärregelleistungsbetrieb abhängig von Informationen zu dem Versorgungsstrang und zumindest Informationen zu bereits installierter Primärregelleistung entlang dieses Versorgungsstrangs aktiviert oder deaktiviert ist. Diese Aktivierung/Deaktivierung kann zum Installationszeitpunkt oder davor erfolgen. Die Aktivierung bzw. Deaktivierung kann dabei statisch sein, so dass eine einmalige Entscheidung für einen Energiespeicher getroffen wird, eher dieser an das Netz angeschlossen wird.

Ein weiterer Aspekt ist ein Versorgungsstrang nach Anspruch 11.

In diesem Versorgungsstrang sind gemäß einem vorteilhaften Ausführungsbeispiel zumindest zwei Energiespeicher mit aktiviertem Primärleistungsbetrieb vorgesehen. Diese beiden Energiespeicher bilden zusammen ein virtuelles Kraftwerk, welches ohne Kommunikation zwischen den Energiespeichern auskommt. Die Energiespeicher synchronisieren sich über die Netzfrequenz selbsttätig und stellen die Primärregelleistung abhängig von der Netzfrequenz zur Verfügung.

Es ist jedoch denkbar, dass nicht alle Energiespeicher zur Primärregelleistung beitragen müssen, insbesondere ist dies denkbar, wenn die Primärregelleistung die an eine Versorgungsstrang vorhandene Last bereits abdeckt. Daher kann entlang dieses Versorgungsstrangs ein Energiespeicher vorgesehen sein, in dem der Primärregelleistungsbetrieb deaktiviert ist. Die Deaktivierung des Primärregelleistungsbetriebs kann bedeuten, dass der Energiespeicher im Grunde in der Lage ist, Primärregelleistung zur Verfügung zu stellen, diese Funktion jedoch insbesondere vor der Installation an den Versorgungsstrang deaktiviert worden ist.

Die Aktivierung/Deaktivierung des Primärregelleistungsbetriebs erfolgt gemäß einem Ausführungsbeispiel abhängig von Informationen zu dem Versorgungsstrang und Informationen zu bereits installierter Primärregelleistung entlang dieses Versorgungsstrangs.

Nachfolgend wird der Gegenstand anhand einer Ausführungsbeispiele zeigenden Zeichnung näher erläutert. In der Zeichnung zeigen:
- Fig. 1: eine Steuervorrichtung gemäß einem Ausführungsbeispiel;
- Fig. 2: eine Anordnung von Steuervorrichtungen entlang eines Versorgungsnetzes;
- Fig. 3a: eine Regelkennlinie für einen Primärregelleistungsbetrieb gemäß einem Ausführungsbeispiel nach einem Schwarzfall;
- Fig. 3b: eine Regelkennlinie für einen präventiven Primärregelleistungsbetrieb gemäß einem Ausführungsbeispiel vor einem Schwarzfall;
- Fig. 4: ein Ablauf eines gegenständlichen Verfahrens gemäß einem Ausführungsbeispiel.

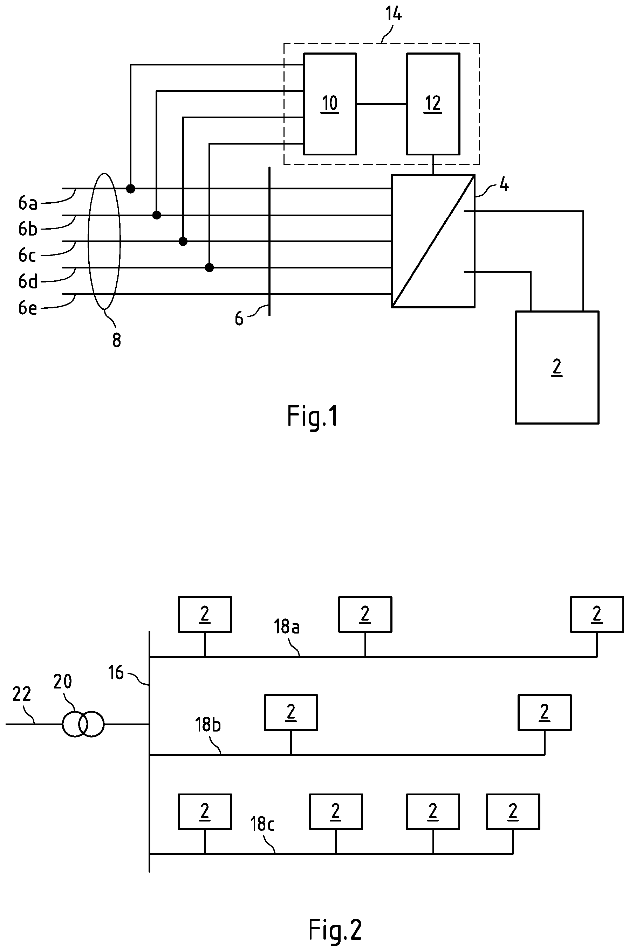

Fig. 1 zeigt einen Energiespeicher 2, beispielsweise einen Batteriespeicher. Dieser Energiespeicher 2 ist mit einem Wechselrichter 4 verbunden. Der Wechselrichter 4 stellt eine Verbindung zwischen dem gleichspannungsseitigen Energiespeicher 2 und einem wechselspannungsseitigen Netzanschluss 6 zur Verfügung. Der Netzanschluss 6 verfügt über drei Phasen 6a-c, einen Nullleiter 6d und einen Erdungsleiter 6e, wobei die Leiter 6d, e durch einen Leiter gebildet sein können. Über den Netzanschluss 6 ist der Energiespeicher 2 mit dem Versorgungsnetz 8 verbunden.

Im Bereich des Netzanschlusses 6 sind Abgriffe vorgesehen, über die eine Detektionseinrichtung 10, eine netzseitige Netzfrequenz, insbesondere an jeder der Phasen 6a-c erfassen kann. Die Detektionseinrichtung 10 ist mit einer Stelleinrichtung 12 verbunden und steuert die Stelleinrichtung 12 an. Die Detektionseinrichtung 10 und die Stelleinrichtung 12 können gemeinsam eine Steuervorrichtung 14 bilden. Es versteht sich, dass in der Steuervorrichtung 14 weitere Elemente vorgesehen sein können, welche der Übersichtlichkeit halber hier nicht gezeigt sind.

Über die Stelleinrichtung 12 lässt sich der Wechselrichter 4 ansteuern, insbesondere derart, dass ein Leistungsfluss zwischen dem Energiespeicher 2 und dem Netzanschluss 6 gesteuert wird. Dabei ist es möglich, sowohl die Ausgangsspannung des Wechselrichters in Richtung des Netzanschlusses 6 zu beeinflussen, als auch die Frequenz der Phasen 6a-c.

Fig. 2 zeigt eine beispielhafte Netztopologie, bei der in einem Ortsnetz 16 mehrere Versorgungsstränge 18a-c vorgesehen sein können. An jedem der Versorgungsstränge 18a-c können Energiespeicher 2 mit einer Topologie gemäß der Fig. 1 angeordnet sein. Das Ortsnetz 16 ist über einen Ortsnetztransformator 20 mit einem Mittelspannungsnetz 22 verbunden.

Zur Wiederherstellung des Netzes nach einem Schwarzfall ist vorgesehen, dass einige der Energiespeicher 2 an den Versorgungssträngen 18a-c eine aktivierte Steuervorrichtung 14 aufweisen, wohingegen andere Energiespeicher 2 eine solche Aktivierung nicht aufweisen. So kann beispielsweise in dem Strang 18a der mittlere Energiespeicher 2 eine Steuervorrichtung 14 aufweisen, die deaktiviert ist. Auch können die mittleren Energiespeicher 2 in dem Versorgungsstrang 18c eine Steuervorrichtung 14 aufweisen, die deaktiviert ist.

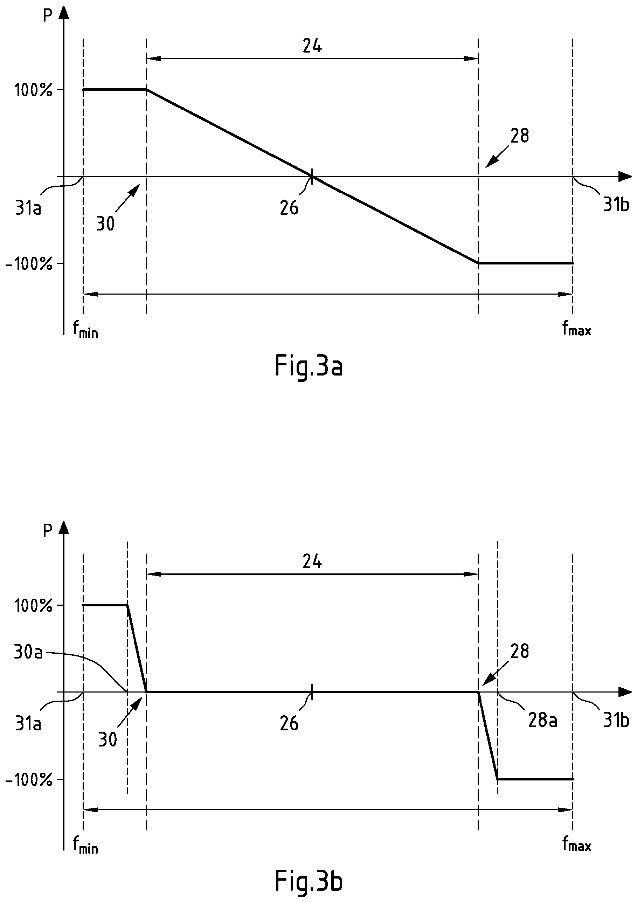

Wie bereits erläutert, kann der Primärregelleistungsbetrieb unmittelbar nach einem detektierten Schwarzfall einsetzen. Insbesondere ist dies der Fall, wenn zunächst ein Stromausfall detektiert wird und anschließend eine Spannungsrückkehr. In einem solchen Fall folgt der Wechselrichter 4 der in der Fig. 3a angegebenen Kennlinie. Hierbei ist die Leistung P, welche durch den Energiespeicher 2 zur Verfügung gestellt werden muss, frequenzabhängig. Dabei kann ein Leistungsfluss in Richtung des Netzanschlusses 6 als positive Leistung und eine Leistungsflussausrichtung des Netzanschlusses 6 in Richtung des Energiespeichers 2 als negative Leistung angesehen werden.

In einem Regelband 24, um eine mittlere Netzfrequenz 26 herum, wird der Leistungsfluss linear abhängig von der Netzfrequenz beeinflusst. Überschreitet die Netzfrequenz eine ober Grenzfrequenz 28, so muss die gesamte Regelleistung vom Energiespeicher 2 aufgenommen werden. Unterschreitet die Netzfrequenz eine untere Grenzfrequenz 30, so muss die gesamte Regelleistung durch den Energiespeicher zur Verfügung gestellt werden. Die Regelung erfolgt bevorzugt in einem Definitionsbereich der Netzfrequenz von einer minimalen Frequenz 31a bis zu einer maximalen Frequenz 31b. Die minimale Frequenz 31a ist größer 0 Hz, die maximale Frequenz 31b bevorzugt kleiner 100Hz. Diese Art der Primärregelleistung an sich ist bekannt.

Auch kann bereits ein sich anbahnender Schwarzfall durch eine Veränderung der Netzfrequenz detektiert werden. In diesem Fall kann eine präventive Primärregelleistung gemäß einer Regelkennlinie gemäß Fig. 3b aktiviert werden. Der Wechselrichter 4 folgt der in der Fig. 3b angegebenen Kennlinie. Hierbei ist die Leistung P, welche durch den Energiespeicher 2 zur Verfügung gestellt werden muss, ebenfalls frequenzabhängig. Dabei kann ein Leistungsfluss in Richtung des Netzanschlusses 6 als positive Leistung und eine Leistungsflussausrichtung des Netzanschlusses 6 in Richtung des Energiespeichers 2 als negative Leistung angesehen werden.

Unterschreitet die Netzfrequenz eine untere Grenzfrequenz 30, so kann in einem engen Frequenzband Regelleistung zur Verfügung gestellt werden. Die untere Grenzfrequenz 30 liegt bevorzugt über der Netzfrequenz 30a, bei der das Netz zumindest in Teilen automatisch abgeschaltet wird (Lastabwurf bei Unterfrequenz). Durch die Leistungseinspeisung wird versucht, das Netz zu stabilisieren, insbesondere die Frequenz des Netzes wieder anzuheben.

Überschreitet die Netzfrequenz eine obere Grenzfrequenz 28, so kann in einem engen Frequenzband Regelleistung bezogen werden. Die obere Grenzfrequenz 28 liegt bevorzugt unter der Netzfrequenz 28a, bei der dezentrale Einspeiseleistung automatisch herunter gefahren wird (Überfrequenzabschaltung). Durch die Leistungsaufnahme wird versucht, das Netz zu stabilisieren, insbesondere die Frequenz des Netzes wieder abzusenken.

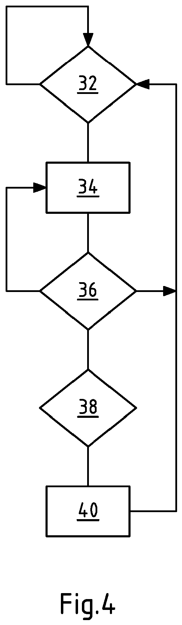

Fig. 4 zeigt den Ablauf eines gegenständlichen Verfahrens nach einem Ausführungsbeispiel. Zunächst wird der Energiespeicher 2 in einem Regelbetrieb betrieben. Hierbei wird der Wechselrichter 4 insbesondere unabhängig von einer Netzfrequenz am Netzanschluss 6 betrieben. Dabei wird zunächst die Netzfrequenz überwacht (32). Diese Überwachung (32) erfolgt dauerhaft. Solange die Netzfrequenz am Netzanschluss 6 innerhalb des Regelbands 24 ist, wird der Schritt Überwachung (32) dauerhaft durchgeführt. Wird festgestellt, dass die Netzfrequenz am Netzanschluss 6 das Regelband 24 verlässt, so wird der Energiespeicher 2 in den Primärregelleistungsbetrieb versetzt (34).

Anschließend wird überwacht (36), ob die Netzspannung am Netzanschluss eine untere Grenze unterschreitet, insbesondere ob die Netzspannung 0 V erreicht (36). Ist dies nicht der Fall, verbleibt die Steuereinrichtung in dem Primärregelleistungsbetrieb (34).

Ergibt die Überwachung (36), dass die Netzspannung wieder in das Regelband 24 zurückgekehrt ist, schaltet der Energiespeicher 2 in den Regelbetrieb um und es wird in den Schritt 32 verzweigt.

Wird festgestellt, dass die Spannung unter den Grenzwert fällt, insbesondere zu 0 V wird, so wird überwacht (38), ob die Spannung am Netzanschluss 6 0 V überschreitet oder nicht.

In dem Moment, in dem die Spannung 0 V überschreitet, wird in den Primärregelleistungsbetrieb (40) verzweigt. Dieser Betriebsmodus wird für eine Mindestdauer, beispielsweise 15 Minuten, beibehalten und der Leistungsfluss zwischen dem Netzanschluss 6 und dem Energiespeicher 2 erfolgt entsprechend der Kennlinie gemäß der Fig. 3a.

Nach Ablauf der Mindestdauer wird wieder in den Schritt 32 zurückverzweigt.

Mit Hilfe des gegenständlichen Energiespeichers ist es möglich, sowohl einen Regelbetrieb als auch einen Primärregelleistungsbetrieb zu unterstützen und somit ohne maßgeblichen Einfluss auf die Funktionalität des Energiespeichers diesen netzdienlich auszurüsten.

Insbesondere ist mit Hilfe des gegenständlichen Energiespeichers ein Wiederanfahren nach einem Schwarzfall mit mehreren Energiespeichern 2 möglich, welche sich zu einem virtuellen Kraftwerk zusammenschließen können.

### Bezugszeichenliste

- 2: Energiespeicher
- 4: Wechselrichter
- 6: Netzanschluss
- 6a-c: Phasen
- 6d: Nullleiter
- 6e: Erdungsleiter
- 8: Versorgungsnetz
- 10: Detektionseinrichtung
- 12: Stelleinrichtung
- 14: Steuervorrichtung
- 16: Ortsnetz
- 18: Versorgungsstrang
- 20: Ortsnetztransformator
- 22: Mittelspannungsnetz
- 24: Regelband
- 26: mittlere Netzfrequenz
- 28: obere Netzfrequenz
- 30: untere Netzfrequenz
- 32: Überwachung
- 34: Primärregelleistungsbetrieb
- 36: Überwachung
- 38: Überwachung
- 40: Primärregelleistungsbetrieb

## Patentansprüche

1. Verfahren zum Betreiben eines Energiespeichers (2) umfassend,
- Betreiben des Energiespeichers (2) in einem von einem Primärregelleistungsbetrieb (34) verschiedenen Regelbetrieb, wobei im Regelbetrieb der Austausch elektrischer Leistung zwischen dem Energiespeicher (2) und einem Netzanschluss (6) des Energiespeichers (2) unabhängig von einer Netzfrequenz ist,
- Erfassen eines Stromausfalls an dem Netzanschluss (6) des Energiespeichers (2),
- Detektieren einer Spannungsrückkehr an dem Netzanschluss (6) nach dem Erfassen des Stromausfalls,
- Wechseln des Betriebsmodus des Energiespeichers (2) vom Regelbetrieb in den Primärregelleistungsbetrieb (34),
**dadurch gekennzeichnet, dass** das Verfahren weiter umfasst:
- Bereitstellen von Primärregelleistung durch den Energiespeicher (2) an dem Netzanschluss (6) unmittelbar nachdem die Spannungsrückkehr detektiert wurde.

2. Verfahren nach Anspruch 1,
**dadurch gekennzeichnet,**
- **dass** vor dem Erfassen des Stromausfalls eine Netzfrequenz an dem Netzanschluss (6) erfasst wird und Wechseln des Betriebsmodus des Energiespeichers (2) vom Regelbetrieb in den Primärregelleistungsbetrieb (34), wenn die Netzfrequenz ein Regelband (24) verlässt.

3. Verfahren nach Anspruch 1 oder 2,
**dadurch gekennzeichnet,**
- **dass** der Energiespeicher (2) unmittelbar nach dem Detektieren der Spannungsrückkehr im Primärregelleistungsbetrieb (34) betrieben wird.

4. Verfahren nach einem der vorangehenden Ansprüche,
**dadurch gekennzeichnet,**
- **dass** der Primärregelleistungsbetrieb (34) nach dem Detektieren der Spannungsrückkehr für einen Mindestzeitraum erhalten wird und dass nach Ablauf des Mindestzeitraums der Energiespeicher (2) in den Regelbetrieb zurückkehrt.

5. Verfahren nach einem der vorangehenden Ansprüche,
**dadurch gekennzeichnet,**
- **dass** der Stromausfall für eine Mindestdauer erfasst wird, bevor der Energiespeicher (2) in dem Primärregelleistungsbetrieb (34) betrieben wird.

6. Verfahren nach einem der vorangehenden Ansprüche,
**dadurch gekennzeichnet,**
- **dass** die Regelkennlinie des Energiespeichers (2) im Primärregelleistungsbetrieb (34) von der Regelkennlinie des Energiespeichers (2) im Regelbetrieb verschieden ist.

7. Verfahren nach einem der vorangehenden Ansprüche,
**dadurch gekennzeichnet,**
- **dass** zumindest zwei Energiespeicher (2) entlang eines gemeinsamen Versorgungsstrangs (18) Primärregelleistung an ihrem jeweiligen Netzanschluss (6) nach dem Detektieren der Spannungsrückkehr bereitstellen.

8. Verfahren nach einem der vorangehenden Ansprüche,
**dadurch gekennzeichnet,**
- **dass** abhängig von Informationen zu einem gemeinsamen Versorgungsstrang (18) und zumindest Informationen zu bereits installierter Primärregelleistung entlang dieses Versorgungsstrangs (18) ein Energiespeicher (2) zusätzlich im Primärregelleistungsbetrieb bei Detektieren der Spannungsrückkehr betrieben wird.

9. Steuervorrichtung (14) für einen Energiespeicher (2), insbesondere Batteriespeicher mit,
- einer Detektionseinrichtung (10) zur Überwachung (32) einer Netzfrequenz an einem netzseitigen Anschluss des Energiespeichers (2) an einem Energieversorgungsnetz (8),
- einer Stelleinrichtung (12) eingerichtet zur Einstellung einer Frequenz eines zwischen dem Energiespeicher (2) und dem netzseitigen Anschluss des Energiespeichers (2) an das Energieversorgungsnetz (8) angeordneten Wechselrichters (4), wobei die Stelleinrichtung (12) den Energiespeicher (2) im Regelbetrieb betreibt, wobei im Regelbetrieb der Austausch elektrischer Leistung zwischen dem Energiespeicher (2) und einem Netzanschluss (6) des Energiespeichers (2) unabhängig von einer Netzfrequenz ist,
- **dadurch gekennzeichnet,**
- **dass** die Detektionseinrichtung (10) unmittelbar nachdem eine Spannungsrückkehr an dem Netzanschluss (6) nach dem Erfassen des Stromausfalls detektiert wurde, die Stelleinrichtung (12) derart ansteuert, dass der Energiespeicher (2) im Primärregelleistungsbetrieb (34) an dem Netzanschluss (6) betrieben ist.

10. Steuervorrichtung (14) nach Anspruch 9,
**dadurch gekennzeichnet,**
- **dass** der Primärregelleistungsbetrieb (34) abhängig von Informationen zu dem Versorgungsstrang (18) und zumindest Informationen zu bereits installierter Primärregelleistung entlang dieses Versorgungsstrangs (18) aktiviert oder deaktiviert ist.

11. Versorgungsstrang (18) eines Energieversorgungsnetzes (8) mit
- zumindest drei angeschlossenen Energiespeichern mit jeweils einer Steuervorrichtung (14) nach Anspruch 9 oder 10.

12. Versorgungsstrang (18) nach Anspruch 11,
**dadurch gekennzeichnet,**
- **dass** zumindest zwei Energiespeicher (2) mit aktiviertem Primärregelleistungsbetrieb (34) und zumindest ein Energiespeicher (2) mit deaktiviertem Primärregelleistungsbetrieb (34) angeschlossen sind.

13. Versorgungsstrang (18) nach Anspruch 12,
**dadurch gekennzeichnet,**
- **dass** ein Primärregelleistungsbetrieb (34) abhängig von Informationen zu dem Versorgungsstrang (18) und Informationen zu bereits installierter Primärregelleistung entlang dieses Versorgungsstrangs (18) deaktiviert ist.

## Claims

1. Method for operating an energy storage device (2) comprising,
- operating the energy storage device (2) in a regular mode different from a primary power mode (34), wherein in the regular mode the exchange of electrical power between the energy storage device (2) and a grid connection (6) of the energy storage device (2) is independent of a grid frequency,
- detecting a power failure at the grid connection (6) of the energy storage device (2),
- detecting a voltage return at the grid connection (6) after detecting the power failure,
- changing the operating mode of the energy storage device (2) from the regular mode to the primary power mode (34),
**characterized in that** the method further comprises:
- providing primary power by the energy storage device (2) at the grid connection (6) immediately after the voltage return has been detected.

2. Method according to claim 1,
**characterized in that**
- a grid frequency is detected at the grid connection (6) before the power failure is detected, and changing the operating mode of the energy storage device (2) from regular mode to primary power mode (34) when the grid frequency leaves a control band (24).

3. Method according to claim 1 or 2,
**characterized in that**
- the energy storage device (2) is operated in primary power mode (34) immediately after the voltage return is detected.

4. Method according to one of the preceding claims,
**characterized in that**
- the primary power mode (34) is maintained for a minimum period of time after the voltage return is detected, and **in that** the energy storage device (2) returns to regular mode after the minimum period of time has elapsed.

5. Method according to one of the preceding claims,
**characterized in that**
- the power failure is detected for a minimum period before the energy storage device (2) is operated in the primary power mode (34).

6. Method according to one of the preceding claims,
**characterized in that**
- the control characteristic of the energy storage device (2) in the primary power mode (34) is different from the control characteristic of the energy storage device (2) in the regular mode.

7. Method according to one of the preceding claims,
**characterized in that**
- at least two energy storage devices (2) along a common supply line (18) provide primary power at their respective grid connection (6) after the voltage return is detected.

8. Method according to any of the preceding claims,
**characterized in that**
- depending on information about a common supply line (18) and at least information about primary power already installed along this supply line (18), an energy storage device (2) is additionally operated in primary power mode when the voltage return is detected.

9. Control device (14) for an energy storage device (2), in particular battery storage device with,
- a detection device (10) for monitoring (32) a network frequency at a grid side connection of the energy storage device (2) to an energy supply network (8),
- a control device (12) arranged for setting a frequency of an inverter (4) allocated between the energy storage device (2) and the grid-side connection of the energy storage device (2) to the power supply grid (8), the control device (12) operating the energy storage device (2) in the regular mode, the exchange of electrical power between the energy storage device (2) and a grid connection (6) of the energy storage device (2) being independent of a grid frequency in the regular mode,
- **characterized in that**
- the detection device (10), immediately after a voltage return has been detected at the grid connection (6) after the power failure has been detected, actuates the control device (12) in such a way that the energy storage device (2) is operated in primary power mode (34) at the grid connection (6).

10. Control device (14) according to claim 9,
**characterized in that**
- the primary power mode (34) is activated or deactivated as a function of information about the supply line (18) and at least information about primary power already installed along this supply line (18).

11. Supply line (18) of an energy supply network (8) having
- at least three connected energy storage devices, each with a control device (14) according to claim 9 or 10.

12. Supply line (18) according to claim 11,
**characterized in that**
- at least two energy storage devices (2) with activated primary power mode (34) and at least one energy storage device (2) with deactivated primary power mode (34) are connected.

13. Supply line (18) according to claim 12,
**characterized in that**
- a primary power mode (34) is deactivated as a function of information about the supply line (18) and information about primary power already installed along this supply line (18).

## Revendications

1. Procédé d'exploitation d'un accumulateur d'énergie (2) comprenant,
- exploiter l'accumulateur d'énergie (2) dans un mode de régulation différent d'un mode de puissance de régulation primaire (34), où, en mode de régulation, l'échange de puissance électrique entre l'accumulateur d'énergie (2) et un raccordement au réseau (6) de l'accumulateur d'énergie (2) est indépendant d'une fréquence de réseau,
- détecter une coupure de courant au raccordement au réseau (6) de l'accumulateur d'énergie (2),
- détecter un retour de tension au raccordement au réseau (6) après la détection de la coupure de courant,
- changer le mode de fonctionnement de l'accumulateur d'énergie (2) du mode de régulation au mode de puissance de régulation primaire (34),
**caractérisé en ce que** le procédé comprend en outre :
- mettre à disposition de la puissance de régulation primaire par l'accumulateur d'énergie (2) au raccordement au réseau (6) immédiatement après que le retour de la tension a été détecté.

2. Procédé selon la revendication 1,
**caractérisé en ce que**
- avant de détecter la coupure de courant, une fréquence du réseau est détectée au raccordement au réseau (6) et changement du mode de fonctionnement de l'accumulateur d'énergie (2) du mode de régulation au mode de puissance de régulation primaire (34) quand la fréquence du réseau quitte une bande de régulation (24).

3. Procédé selon la revendication 1 ou 2,
**caractérisé en ce que**
- l'accumulateur d'énergie (2) est exploité en mode de puissance de régulation primaire (34) immédiatement après détecter le retour de la tension.

4. Procédé selon l'une des revendications précédentes,
**caractérisé en ce que**
- après la détection du retour de la tension, le mode de puissance de régulation primaire (34) est maintenu pendant une période minimale et que, après l'expiration de la période minimale, l'accumulateur d'énergie (2) retourne au mode de régulation.

5. Procédé selon l'une des revendications précédentes,
**caractérisé en ce que**
- la coupure de courant est détectée pour une durée minimale avant que le dispositif de stockage d'énergie (2) fonctionne dans le mode de puissance de régulation primaire (34).

6. Procédé selon l'une des revendications précédentes,
**caractérisé en ce que**
- la courbe caractéristique de régulation de l'accumulateur d'énergie (2) en mode de puissance de régulation primaire (34) est différente de la courbe caractéristique de régulation de l'accumulateur d'énergie (2) en mode de régulation.

7. Procédé selon l'une des revendications précédentes,
**caractérisé en ce que**
- au moins deux accumulateurs d'énergie (2) fournissent de la puissance de régulation primaire le long d'une ligne d'alimentation commune (18) à leur raccordement au réseau respective (6) après la détection du retour de tension.

8. Procédé selon l'une des revendications précédentes,
**caractérisé en ce que**
- en fonction d'informations sur une ligne d'alimentation commune (18) et d'au moins des informations sur la puissance de régulation primaire déjà installée le long de cette ligne d'alimentation (18), un accumulateur d'énergie (2) est en outre exploité en mode de puissance de régulation primaire lors de la détection du retour de tension.

9. Dispositif de commande (14) pour un accumulateur d'énergie (2), en particulier un accumulateur à batterie, avec
- un dispositif de détection (10) pour la surveillance (32) d'une fréquence de réseau à un raccordement côté réseau de l'accumulateur d'énergie (2) à un réseau d'alimentation en énergie (8),
- un dispositif de réglage (12) configuré pour régler une fréquence d'un onduleur (4) disposé entre l'accumulateur d'énergie (2) et le raccordement côté réseau de l'accumulateur d'énergie (2) au réseau d'alimentation en énergie (8), où le dispositif de réglage (12) exploite l'accumulateur d'énergie (2) en mode de régulation, où l'échange de puissance électrique entre l'accumulateur d'énergie (2) et un raccordement au réseau (6) de l'accumulateur d'énergie (2) est indépendant d'une fréquence de réseau en mode de régulation,
- **caractérisé en ce que**
- le dispositif de détection (10), immédiatement après qu'un retour de tension a été détecté au raccordement au réseau (6) après la détection de la coupure de courant, commande le dispositif de réglage (12) de telle sorte que l'accumulateur d'énergie (2) est exploité en mode de puissance de régulation primaire (34) au raccordement au réseau (6).

10. Dispositif de commande (14) selon la revendication 9,
**caractérisé en ce que**
- le mode de puissance de régulation primaire (34) est activé ou désactivé en fonction d'informations sur la ligne d'alimentation (18) et au moins d'informations sur la puissance de régulation primaire déjà installée le long de cette ligne d'alimentation (18).

11. Ligne d'alimentation (18) d'un réseau d'alimentation en énergie (8) comprenant
- au moins trois accumulateurs d'énergie connectés avec un dispositif de commande (14) selon la revendication 9 ou 10, respectivement.

12. Ligne d'alimentation (18) selon la revendication 11,
**caractérisé en ce que**
- au moins deux accumulateurs d'énergie (2) avec un mode de puissance de régulation primaire (34) activé et au moins un accumulateur d'énergie (2) avec un mode de puissance de régulation primaire (34) désactivé sont raccordés.

13. Ligne d'alimentation (18) selon la revendication 12,
**caractérisé en ce que**
- un mode de puissance de régulation primaire (34) est désactivé en fonction d'informations sur la ligne d'alimentation (18) et d'informations sur la puissance de régulation primaire déjà installée le long de cette ligne d'alimentation (18).
